# EUROPEAN PATENT SPECIFICATION

(11) **EP 1 681 935 B1**
(45) Date of publication and mention of the grant of the patent: **12.09.2007**
(21) Application number: 03776173.1
(22) Date of filing: 06.11.2003
(51) Int. Cl.: A21C 11/12

(54) **UNIT FOR CUTTING A DOUGH SURFACE TO AN EQUAL DEPTH**
SCHNEIDEEINHEIT ZUM SCHNEIDEN DER OBERFLÄCHE EINES TEIGSTÜCKES ZU EINER GLEICHEN TIEFE
UNITE DE COUPE DE LA SURFACE D'UNE PATE SUR UNE PROFONDEUR UNIFORME

(43) Date of publication of application: 26.07.2006
(73) Proprietor: Sarmasik Makine Sanayi Ve Ticaret A.S., 34396 Istanbul (TR)
(72) Inventor: DINLER, Selahattin, Mehmetcik Cad. Aysecik Sokak, Sisli 34394 Istanbul (TR)
(74) Representative: Cerbaro, Elena
(86) International application number: PCT/TR2003/000084
(87) International publication number: WO 2005/044011

(56) References cited:
- EP-A- 0 307 174
- EP-A- 0 555 189
- EP-A- 0 804 879
- FR-A- 2 410 438
- FR-A- 2 625 648
- FR-A- 2 729 826
- US-A- 4 581 971
- US-A- 6 032 561

## Description

This invention pertains to a unit which performs the cutting operation of the product surface with a knife automatically at a certain desired depth based on the upper surface profiles of the bread doughs.

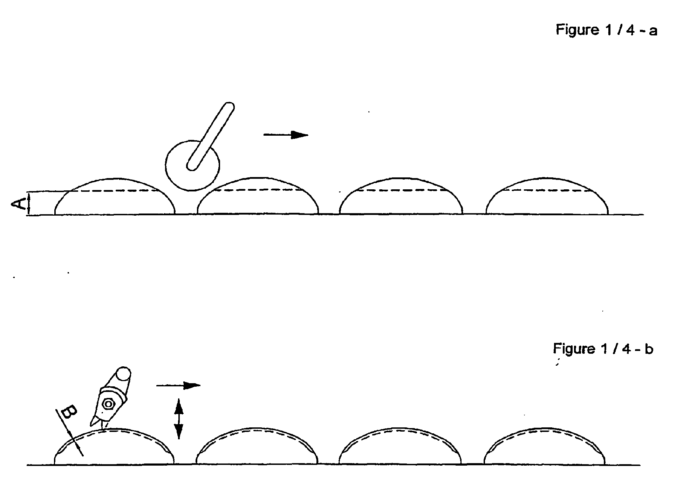

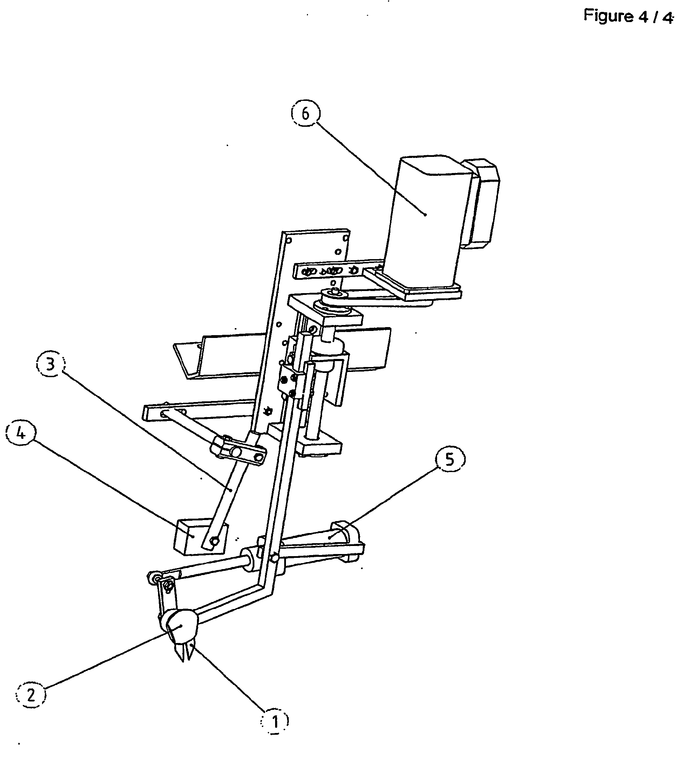

Prior to this invention, the cutting operation of bread doughs was performed manually one by one. In the sample models of this unit developed subsequently, a circular saw or a knife triggered with a motor is used as a cutting knife and the movement of the parts on the product is realized not as per the upper surface profile of the products, but on a linear basis at a certain distance (fig. 1/4-a) in parallel with the lower ground. In this invention, on the other hand, as the cutting movement is realized with reference to the upper surface profile of the product, the cutting depth (fig.1/4-b) always remains at the same depth according to the upper surface profile of the product.

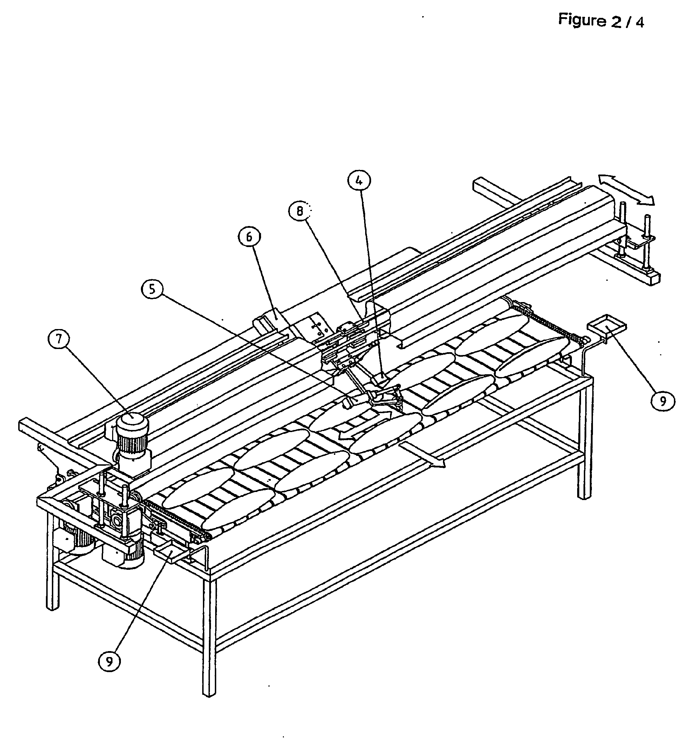

For the operation of this unit, the products are preferably lined on a band which is triggered by a reducer. The products on the band are brought to the cutting position determined with a driver-motor driving system on a time basis. Thereafter, the cutting knife group is moved in the cutting direction by means of the trigger belt (8) triggered with reducer (fig. 2/4 and 3/4) (7) on the rail where it is bedded. During this movement, the product surface profile reference information is perceived with a laser sensor (4) placed within the system. Here, the position adjustment of the laser sensor is performed with a mechanism controlled along three different axes (3). In order to follow this reference information, the cutting knife group is moved with a servo motor (6) in the cutting depth direction. The information as to the quantity of movement is perceived via an encoder in the motor shaft. As a result of a closed loop the cutting operation is performed so as to allow the cutting depth to be at equal distances to the upper surface profile of the dough on an automatic basis.

One or two cutting blades (1) may be available on the cutting knife group. The cutting knife group in the single cutting knife system performs its movement in a single cutting direction.

In a double cutting knife system, on the other hand, the cutting knife group is moved in both cutting directions automatically. But, each cutting knife performs the cutting operation in only one direction. The positions of the cutting knives are changed with a pneumatic piston (5). When the cutting knife group completes its movement in cutting direction in one period, the position of the cutting knife enters into the water in a container (9) at the time of its change by means of a pneumatic piston. During the course of the movement, the cutting group continues its movement in the other period and finally comes to the point where the second water container is placed. Here, the connection of the cutting knives is performed with a mechanism (2) which can be easily dismounted and mounted without need for any adjustment.

An additional cutting knife mechanism can be incorporated in this unit as a 4^{th} axis, optionally, and a single or multiple cutting operation can be obtained in length or breadth on the manufacture.

This unit can be easily used in the companies which make mass production in bread manufacture sector. Following the resting operation of the bread doughs, the cutting operation carried out on the doughs is thus performed as per the intended direction rapidly with the mounting of this unit on the band system.

The line of the knife in the prior art is shown in figure 1/4-a and the line of the knife in this system is shown in the figure 1/4-b.

The left side perspective general view of the unit that cuts the dough surface at equal depth is given in the figure 2/4.

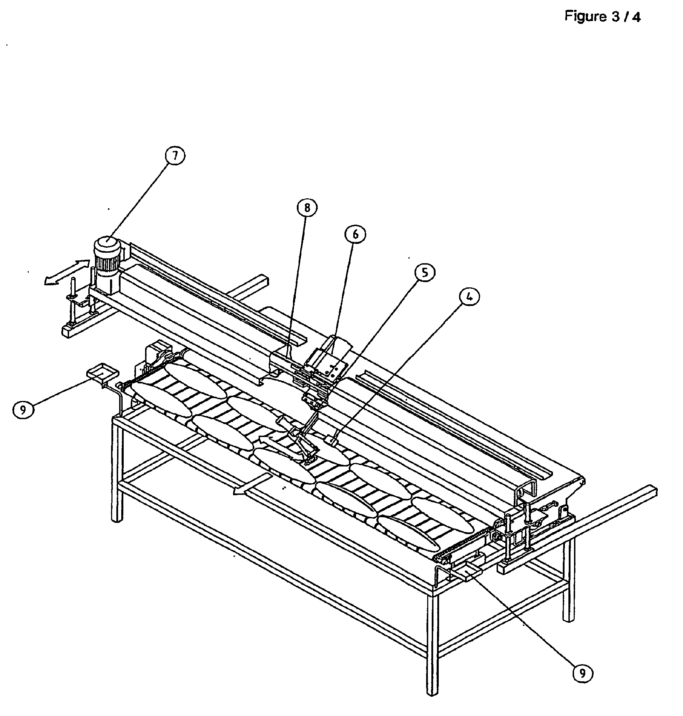

The right side perspective general view of the unit that cuts the dough surface at equal depth is given in figure 3/4. The intelligent blading system rear view is given in figure 4/4.

## Claims

1. Unit for cutting the surface of bread doughs at an equal depth, comprising a cutting knife group connected to a mechanism for moving along three axes, ***characterized in that*** the unit further comprises a laser sensor (4) for perceiving information on the dough upper surface profile, said laser sensor (4) being connected with said mechanism for position adjustment along three axes using an electronic closed 1000 system, and **in that** the movement of the cutting knife group in cutting depth direction is moved by means of an encoder-servomotor control.

2. The unit according to Claim 1, ***characterized in that*** it comprises a mechanism (2) for connection of the cutting knives (1) which can be easily dismounted and mounted without need for any adjustment.

3. The unit according to Claim 1, ***characterized in that*** it comprises a container (9) filled with water for immersion of the cutting knife group at the end of each cutting period, and a pneumatic piston (5) for changing the position of the cutting knife group for the next cutting period.

4. The unit according to Claim 1, ***characterized in that*** it comprises an optional cutting knife mechanism for moving along a 4th axis, enabling a single or multiple cutting operation to be performed in length or breadth direction.

## Patentansprüche

1. Einheit zum Schneiden der Oberfläche von Brotteigen bei einer gleichen Tiefe, umfassend eine Schneidmessergruppe, verbunden mit einem Mechanismus für eine Bewegung entlang dreier Achsen, **dadurch gekennzeichnet, dass** die Einheit ferner einen Laser-Sensor (4) umfasst zum Wahrnehmen von Information über das Teigoberflächenprofil, wobei der Laser-Sensor (4) mit dem Mechanismus zur Positionseinstellung entlang dreier Achsen mittels eines elektronischen Geschlossenkreislaufsystems verbunden ist, und dass die Bewegung der Schneidmessergruppe in Schnitttiefenrichtung mittels einer Encoder-Servomotor-Steuerung und/oder -Regelung durchgeführt wird.

2. Einheit nach Anspruch 1, **dadurch gekennzeichnet, dass** sie einen Mechanismus (2) zum Verbinden der Schneidmesser (1) umfasst, der leicht demontiert und montiert werden kann ohne die Notwendigkeit irgendeiner Einstellung.

3. Einheit nach Anspruch 1, **dadurch gekennzeichnet, dass** sie einen mit Wasser gefüllten Behälter (9) zum Eintauchen der Schneidmessergruppe am Ende jeder Schneidperiode und einen Pneumatikkolben (5) zum Ändern der Position der Schneidmessergruppe für die nächste Schneidperiode umfasst.

4. Einheit nach Anspruch 1, **dadurch gekennzeichnet, dass** sie einen optionalen Schneidmessermechanismus für eine Bewegung entlang einer vierten Achse umfasst, so dass die Durchführung einer Einzel-oder Mehrfach-Schneidoperation in Längen- oder Breitenrichtung möglich wird.

## Revendications

1. Ensemble pour la coupe de la surface de pâte de pain à une profondeur égale, comprenant un groupe de lame de coupe relié à un mécanisme pour le déplacement le long de trois axes, **caractérisé en ce que** l'ensemble comprend, en outre, un capteur laser (4) pour recevoir l'information sur le profil de la surface supérieure de la pâte, ledit capteur laser (4) étant relié audit mécanisme pour l'ajustement de position le long de trois axes en utilisant un système à boucle fermée électronique et **en ce que** le mouvement du groupe de lame de coupe dans la direction de profondeur de coupe est obtenu au moyen d'un dispositif de commande à servomoteur-codeur.

2. Ensemble selon la revendication 1, **caractérisé en ce qu'**il comprend un mécanisme (2) pour la liaison des lames de coupe (1) qui peuvent être facilement démontées et montées sans le besoin d'un quelconque réglage.

3. Ensemble selon la revendication 1, **caractérisé en ce qu'**il comprend un récipient (9) rempli d'eau pour l'immersion du groupe de lame de coupe à la fin de chaque période de coupe et un piston pneumatique (5) pour modifier la position du groupe de lame de coupe pour la période de coupe suivante.

4. Ensemble selon la revendication 1, **caractérisé en ce qu'**il comprend un mécanisme de lame de coupe facultatif pour le déplacement le long d'un quatrième axe, permettant la mise en oeuvre d'une opération de coupe simple ou multiple dans la direction de longueur ou de largeur.
